Europäisches Patentamt

European Patent Office

Office européen des brevets

(11) Publication number: **0 284 400**
**A2**

## (12) EUROPEAN PATENT APPLICATION

(21) Application number: 88302632.0

(22) Date of filing: 24.03.88

(51) Int. Cl.⁴: **B 60 J 7/04**

(30) Priority: 24.03.87 GB 8706917
10.04.87 GB 8708661

(43) Date of publication of application:
28.09.88 Bulletin 88/39

(84) Designated Contracting States: DE ES FR IT

(71) Applicant: TUDOR WEBASTO LIMITED
Forge Lane Minworth Industrial Park
Sutton Coldfield West Midlands BT6 8AH (GB)

(72) Inventor: Dufft, Jurgen Tudor Webasto Limited
forge Lane Minworth Industrial Park
Sutton Coldfield West Midlands B76 8AH (GB)

(74) Representative: Smart, Peter John et al
W.H. BECK, GREENER & CO 7 Stone Buildings Lincoln's Inn
London WC2A 3SZ (GB)

(54) Opening vehicle roof assembly.

(57) An opening roof assembly for a vehicle comprises a roof panel (11) mounted so as to allow

(a) pivoting to raise the trailing edge of the roof panel;

(b) pivoting in an opposite sense to depress the trailing edge of the roof panel;

(c) movement (a) followed by rearward sliding of the roof panel with respect to the frame; and

(d) movement (b) followed by rearward sliding of the roof panel with respect to the frame, combining the functions of a spoiler roof and a tilt and slide roof.

FIG. 1

EP 0 284 400 A2

**Description**

## OPENING VEHICLE ROOF ASSEMBLY

The present invention relates to opening roof assemblies for motor vehicles.

Motor vehicle roofs are known which provide a roof panel which near its front edge is pivoted to allow the trailing edge of the panel to be raised by the vehicle occupant. Provision is sometimes made for the raised roof panel to be slid rearwardly in the roof aperture. Roofs of this kind are known as "spoiler roofs".

Another known type of roof for a motor vehicle has a roof panel which can be elevated as described above or alternatively can be pivoted in the opposite sense to depress the trailing edge of the roof panel which can then be slid back beneath the fixed roof surface behind the roof aperture to open the roof. Roofs of this kind are known as "tilt and slide roofs".

In principle, roofs of either kind may be motorised or manually operated.

Until now, spoiler roofs and tilt and slide roofs have been constructed very differently. To be able to provide a choice of these different functions, an installer has had to carry stocks of at least two quite different roof assemblies.

We have now appreciated that it would be desirable to incorporate all these features together into a single roof so that either the user can be provided with a wider choice of manner of use of the roof or so that an installer can more easily provide either a spoiler roof or an tilt and slide roof whilst carrying lower stocks. Thus, such a multi-feature roof may be constructed so as to allow only some functions to be enabled during installation. A single roof assembly may then be installed to act either as a spoiler roof or as a tilt and slide roof at the installers choice.

The present invention now provides an opening roof assembly for a motor vehicle comprising a roof panel, a frame for mounting to a fixed roof portion of a vehicle and means for mounting the roof panel to the frame for movement to and from a roof panel closed position suitable for closing an aperture in such a fixed roof portion, wherein the said mounting means permits the following user controlled movements of the roof panel from the said closed position:-

    (a) pivoting to raise the trailing edge of the roof panel;

    (b) pivoting in an opposite sense to depress the trailing edge of the roof panel;

    (c) movement (a) followed by rearward sliding of the roof panel with respect to the frame; and

    (d) movement (b) followed by rearward sliding of the roof panel with respect to the frame.

Thus, such a roof assembly according to the invention may be constructed to combine the functions of a spoiler roof with those of a tilt and slide roof providing increased user choice and flexibility of use.

However, during installation or during manufacture of the roof assembly, parts may be adjusted, added, or omitted such that the roof assembly provides the function of a spoiler roof only or the function of a tilt and slide roof only.

Accordingly, according to an alternative aspect of the invention there is provided an opening roof assembly for a motor vehicle comprising a roof panel, a frame for mounting to a fixed roof portion of a vehicle and means for mounting the roof panel to the frame for movement to and from a roof panel closed position suitable for closing an aperture in such a fixed roof portion, wherein the said mounting means includes components which can be assembled to mount the roof panel so as to permit the following user controlled movements of the roof panel from the said closed position:-

    (1) pivoting to raise the trailing edge of the roof panel; and

    (2) movement (1) followed by rearward sliding of the roof panel with respect to the frame; and includes components which can be assembled to mount the roof panel so as to permit the following user controlled movements of the roof panel from the said closed position:-

    (3) pivoting to depress the trailing edge of the roof panel; and

    (4) movement (3) followed by rearward sliding of the roof panel with respect to the frame.

Preferably the roof panel is connected to the slide members, e.g. to the rear slide members in particular, by a pair of link arms. Elevation or depression of the link arms accompanies raising or depression of the roof panel.

Preferably, each link arm is articulated to the roof panel or a respective rear slide member and is provided with at least one cam follower member cooperating with a cam path associated with the other of said roof panel and the respective rear slide member.

By this means, movement of the link arms can serve to direct the elevation or depression of the trailing edge of the pivoting roof panel.

Preferably, each cam path is provided on a cam member carried by the roof panel.

Whilst it would be possible for the raising and depression of the roof panel to be conducted directly by the user pushing the panel up or pulling the panel down, it will generally be preferable to provide means for displacing the rear slide member relative to the roof panel in conjunction with the cam and cam follower arrangements described above so as to provide a more indirect method of raising and depressing the trailing edge of the roof panel.

Preferably therefore displacement of the rear slide members relative to the roof panel causes said cam follower member or members to follow the respective cam path and each said cam path is shaped to produce pivoting of the link arms to pivot the roof panel to raise or lower the trailing edge thereof according to the sense of said relative displacement.

With a view to providing greater stability of the roof panel to guard against rattling noises and vibration, preferably each link arm is provided with two said cam follower members, each link arm is associated with a respective cam path, and each cam path comprises two portions to be followed, one by each of the two cam follower members, during pivoting of the roof panel at least between the closed position and positions in which the trailing edge thereof is depressed from the closed position.

To allow maximum raising of the trailing edge of the roof panel, it is preferred that one of said cam follower members of each link arm escapes from the respective cam path upon the roof panel being pivoted to raise the trailing edge from the closed position by a predetermined extent.

The assembly may comprise on each side of the roof assembly a pair of longitudinally extending guide rails associated with the frame of the roof assembly, one rail in each said pair providing guidance for a respective front slide member during rearward sliding with the panel raised, and the other rail in each said pair providing guidance for a respective front slide member during rearward sliding with the panel lowered.

Means may be provided for engaging each front slide member with a respective said one rail whilst disengaging each front slide member from a respective said other rail and vice versa.

In previously known opening roofs for vehicles, where the raising of the trailing edge of the roof (or its depression) is controlled by cam follower members cooperating with cam members associated with link arms, it is usual that movement of an operating member upon which the operating mechanism of the roof acts should be in the same direction (either forward or backward) on each side of the roof to produce raising or depression of the trailing edge of the roof panel. Conventionally, these movements are controlled by a pair of cables, rigid to pressure, which run from an actuating mechanism such as a winding handle or motor drive to an operating member associated with the link arm on either side of the roof panel. For pivoting the roof panel in a particular sense, such as to raise the trailing edge, both cables are moved in the same manner by the actuating mechanism, either drawing the cables towards the actuating mechanism or paying them out from the actuating mechanism.

To reduce the complexity of such a construction and to reduce costs, we prefer that the sense of the said relative displacement of the rear slide members corresponding to raising of the roof panel trailing edge for a first of said rear slide members with its associated link arm and cam path is opposite to that corresponding to said raising movement for the other of said rear slide members with its associated link arm and cam path.

This permits that the rear slide members are connected via a connecting member (such as a cable) which member is reversibly displaceable along a drive path to push one rear slide member whilst pulling the other, and drive means is provided for displacing said connecting member along said drive path. The drive means may be manually driven, e.g. may be a winding handle, or may be power driven, e.g. an electric motor.

This form of construction allows that the link arms on the two sides of the roof may be identical whereas conventionally they are "handed" and are mirror images of one another.

Both in this type of embodiment of the invention and in others, it is preferred that there be user actuable drive means for driving the roof panel through movements (a) and (b) (or (1) and (3)), which drive means is carried by the roof panel. This is contrary to the usual practice in which drive means for effecting pivoting movement of the roof panel is carried by the roof frame and does not slide with the panel.

To increase the versatility of the use of roof assemblies according to the invention, such roof assemblies may include means for disabling the assembly from carrying out movements (a) and (c) or from carrying out movements (b) and (d).

The assembly may include user actuable drive means which is actuable to drive, starting from the roof closed position, in a first sense to bring about movements (a) and (c) and is actuable, starting from the roof closed position, to drive in a second sense to bring about movements (b) and (d), and said disabling means may serve to prevent said driving movement in one of said first and second senses starting from the roof closed position.

The user actuable drive means may be actuated by a manually operated rotary control and said disabling means may act to block rotation of said control in a selected sense starting from the roof closed position.

In a further main aspect, the invention provides an opening roof assembly for a motor vehicle comprising a roof panel, a frame for mounting to a fixed roof portion of a vehicle and means for mounting the roof panel to the frame for movement to and from a roof panel closed position by pivoting of the roof panel wherein the roof panel is connected to a pair of rear slide members by a pair of link arms, the slide members being carried by a pair of longitudinally running guide rails associated with the frame, wherein each link arm is articulated to the roof panel or a respective rear slide member and is provided with at least one cam follower member cooperating with a cam path associated with the other of said roof panel and the respective rear slide member and wherein displacement of the rear slide members relative to the roof panel causes said cam follower member or members to follow their respective cam paths and each said cam path is shaped to produce pivoting of the link arms to pivot the roof panel according to the sense of said relative displacement, the arrangement being such that the sense of said relative displacement corresponding to pivoting of the roof panel in a selected sense for a first of said rear slide members with its associated link arm and cam path is opposite to that corresponding to said pivoting movement for the other of said rear slide members with its associated link arm and cam path.

According to a further main aspect of the invention there is provided an opening roof assembly for a motor vehicle comprising a roof panel, a frame for mounting to a fixed roof portion of a vehicle and means for mounting the roof panel to the frame for movement to and from a roof panel closed position suitable for closing an aperture in such a fixed roof portion, wherein the said mounting means includes components which can be assembled to mount the roof panel so as to permit the following user controlled movements of the roof panel from the said closed position:-

(1) pivoting to raise the trailing edge of the roof panel; and

(2) movement (1) followed by rearward sliding of the roof panel with respect to the frame; and includes components which can be assembled to mount the roof panel so as to permit the following user controlled movements of the roof panel from the said closed position:-

(3) pivoting to depress the trailing edge of the roof panel; and

(4) movement (3) followed by rearward sliding of the roof panel with respect to the frame.

According to a still further aspect of the invention there is provided an opening roof assembly for a motor vehicle comprising a roof panel, a frame for mounting to a fixed roof portion of a vehicle and means for mounting the roof panel to the frame for movement to and from a roof panel closed position suitable to close an aperture in such a fixed roof portion by tilting of the roof panel and sliding of the tilted roof panel,

said frame comprising or carrying a pair of oppositely laterally disposed, longitudinally running guide rails on which the roof panel is supported for sliding movement by a pair of front slide members and a pair of rear slide members, and said roof panel being connected to the slide members via a pair of pivoted link arms, wherein the roof assembly includes an actuator connected to each of said link arms and adapted to produce controlled pivoting of said link arms to tilt the roof panel, which actuator is mounted on the roof panel and slides with the roof panel.

According to a still further aspect of the invention, there is provided an opening roof assembly for a vehicle comprising a roof panel, a frame for mounting to a fixed roof portion of a vehicle and means for mounting the roof panel to the frame for movement to and from a roof panel closed position suitable for closing an aperture in such a fixed roof portion, wherein the said mounting means permits, starting from the roof closed position, pivoting to raise the trailing edge of the roof panel and wherein the frame carries or comprises a pair of laterally disposed longtudinally running guide rails and the roof panel carries a pair of laterally disposed longitudinally running guide rails, the guide rails of the frame diverging rearwardly from the guide rails of the panel in the roof closed position, said mounting means comprising a pair of front panel supports by which the panel is mounted for pivoting movement and a pair of link arms each connecting between and being slideable in both of a respective guide rail of the roof panel and a respective guide rail of the frame, whereby sliding of the link arms forwardly in said guide rail causes pivoting to raise the trailing edge of the roof panel.

Preferably, the frame comprises or carries a fixed second pair of laterally disposed, longitudinally extending guide rails, the said front panel supports are a pair of shoes slideable in said second pair of guide rails, and said first mentioned pair of guide rails of the frame are slideable also in the second pair of guide rails for sliding movement with the panel whereby the panel is slideable rearwardly from the closed position after the rear edge thereof has been raised.

Preferably, the frame carries or comprises a fixed third pair of laterally disposed, longitudinally extending guide rails, each member of said third pair lying generally alongside a respective member of said second pair and wherein said front panel supports are shiftable between said second and third pairs of guide rails whereby in said sliding movement the front of the panel may be guided in said second pair or said third pair of guide rails.

Preferably, the rearward movement of each link arm in the respective said first guide rail of the frame is limited and the arrangement is such that rearward movement of the link arms in the guide rails of the panel from the roof closed position causes pivoting of the link arms about their engagement in the said first guide rails of the frame causing depression of the trailing edge of the panel.

Two embodiment of the invention will be described by way of illustration with reference to the accompanying drawings in which:-

Figure 1 is a perspective view of a roof assembly according to the invention,

Figure 2 shows in cut away plan view the front left hand corner region of the roof assembly of Figure 1,

Figure 3 is a front view corresponding to Figure 2,

Figure 4 is a cut away plan view of the front left hand side region of the roof assembly of Figure 1,

Figure 4A is a section on the line A-A in Figure 4,

Figure 4B is a section on the line B-B in Figure 4,

Figure 5 is a side elevation of the tilting mechanism of the roof assembly of Figure 1, and

Figure 6 is a plan cut away view of the front right hand portion of the roof assembly of Figure 1.

Figure 7 is a cut away plan view of one front corner region of a second roof assembly according to the invention;

Figures 8a, 8b and 8c are cut away side elevations of the tilting mechanism of the roof assembly of Figure 7 shown in intermediate, outer and inner planes in (a) the closed position, (b) the tilted up position and (c) the tilted down position;

Figure 9 is a section on the line A-A of Figure 7;

Figure 10 is a section on the line B-B of Figure 7; and

Figures 11a and 11b show in side elevation the anti-tilt locking mechanism of the assembly of Figure 7 and (a) the unlocked and (b) the locked positions.

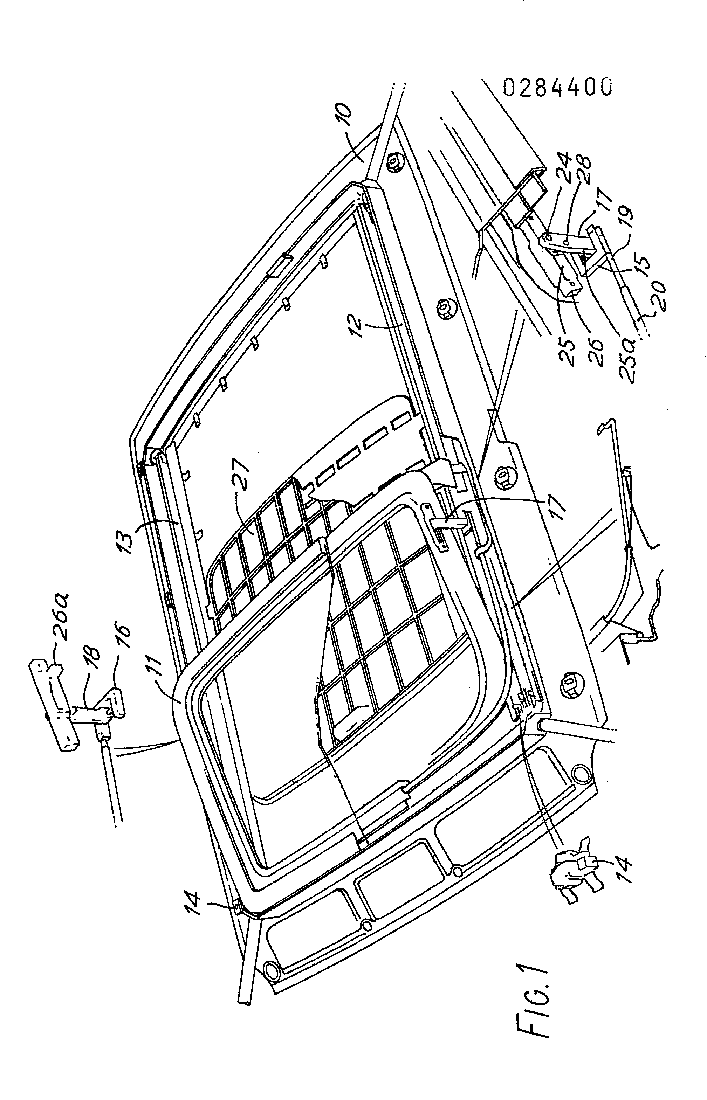

The roof assembly of Figure 1 comprises a frame 10 supporting a movable roof panel 11. The frame is for fitting beneath an aperture in the fixed roof surface of a motor vehicle which the roof panel is adapted to close.

The roof panel is mounted for fore and aft sliding movement on a pair of longitudinally extending, laterally disposed guide rails 12,13. The roof panel is mounted for sliding on the guide rails by a pair of front slide pads 14 to which the roof panel is articulated for pivoting movement. The roof panel is further carried on the guide rails by a pair of rear slide members 15,16 to which the roof panel is connected by respective link arms 17,18.

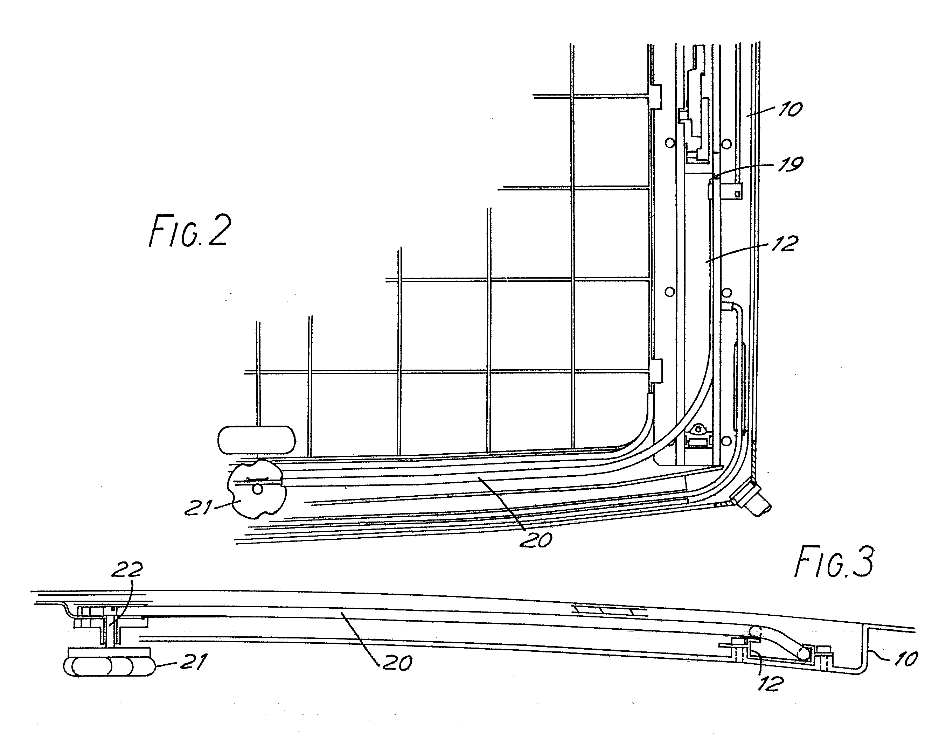

Each rear slide member 15,16 is connected to a respective end of a flexible cable 19 guided in a generally U-shaped cable guide 20 extending across the front edge of the roof assembly and partway along each of the guide rails 12,13. At the mid-point of the front run of the cable guide 20 there is provided a drive mechanism comprising a hand wheel 21 (Figures 2, 3) bearing a toothed pinion 22 which is in toothed engagement with a central toothed portion of the cable 19. The cable guide 20 is interrupted to permit engagement of the pinion 22 and the cable at this central location. The hand wheel 21 and the cable guide 20 are carried by the front edge region of the sliding roof panel 11 and travel therewith when the roof panel is slid on the guide rails 12, 13.

It can be seen that rotation of the hand wheel 21 will cause displacement of the cable 19 in the cable guide 20 in a direction dependant on the direction of rotation of the hand wheel.

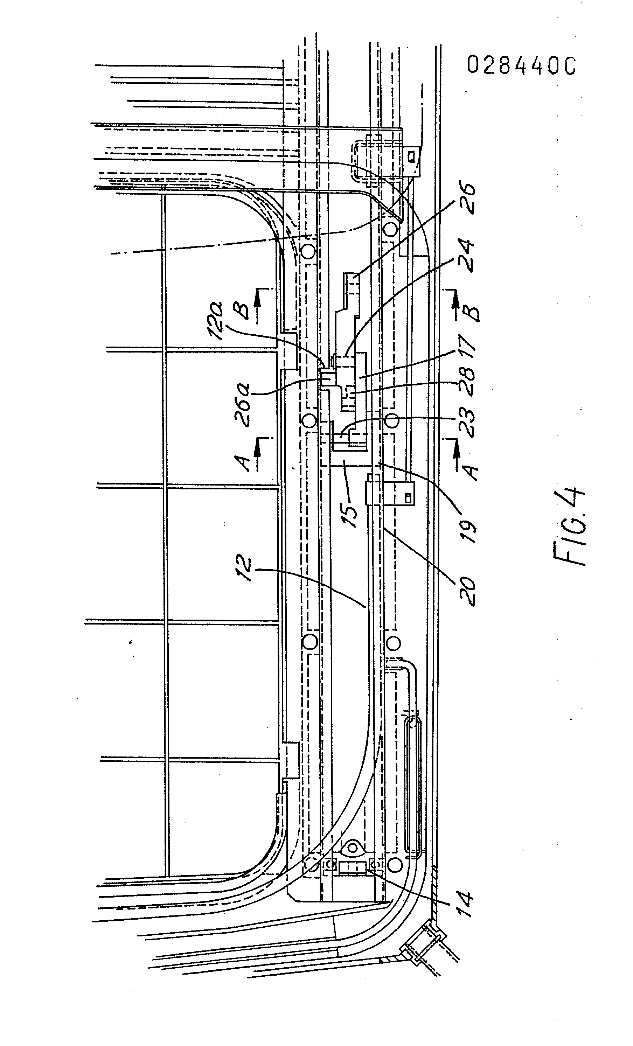

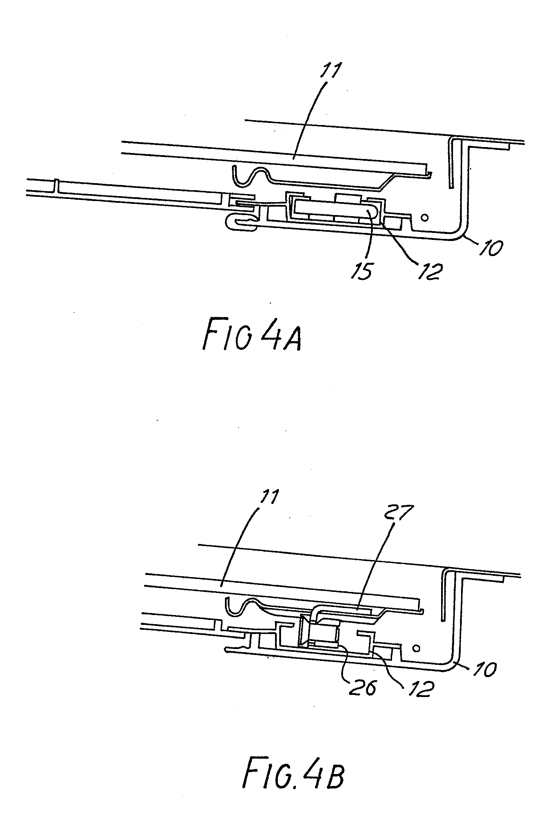

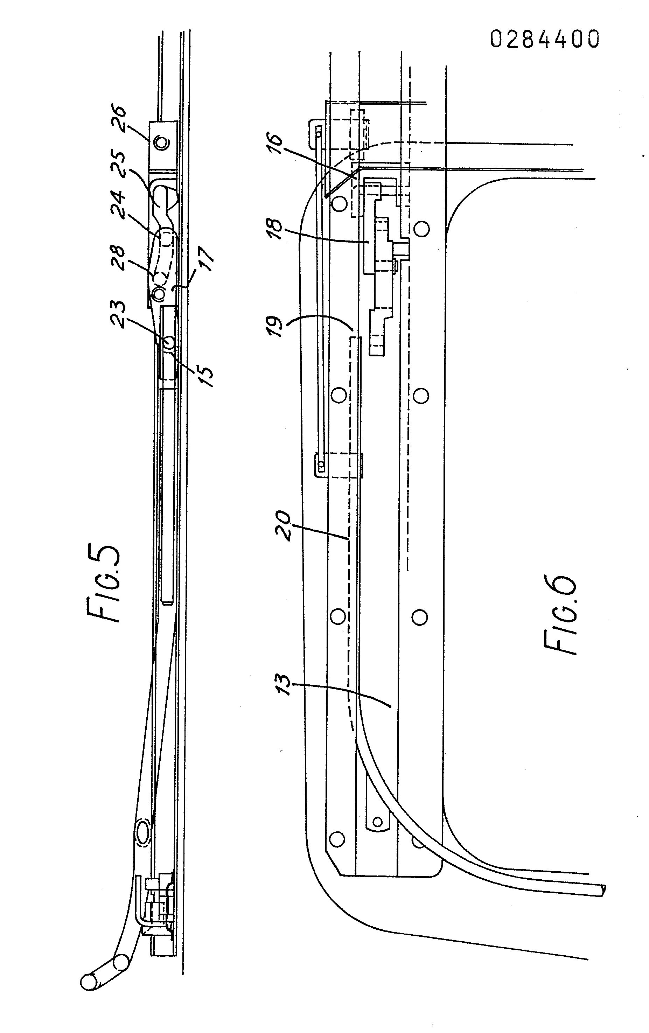

As best seen with reference to Figures 4 and 5, cable 19 is attached at one end to the rear slide member 15 which is located for sliding movement in the guide rail 12 and at its other end to the rear slide member 16. The rear slide member 15 is generally U-shaped with its open end facing rearwardly. A pivot pin 23 bridges the arms of the U of the rear slide member 15 and one end of link arm 17 is mounted for pivoting movement on the pivot pin 23. The opposite end of the link arm 17 carries a pin 24 which is slidingly received in a through slot 25 in a cam plate 26 carried by a bracket 27 attached to roof panel 11 (Figure 4b). A shorter pin 28 carried by the link arm 17 extends into but not through the slot 25 of the cam plate 26. A downwardly facing opening 25a in the side wall of the slot 25 approximately mid-way along the slot 25 allows the pin 28 to escape from the cam path defined by the slot at the appropriate stage of opening of the roof panel as described hereafter.

Cam plate 26 bears a laterally protruding lug 26a which passes through an opening 12a in an upper wall of guide rail 12 during upward tilting of the roof panel. Thus, the roof panel can only be tilted up or returned to the flat position if the panel is slid fully forward.

The corresponding mechanism on the opposite side of the roof shown in Figure 6 is generally similar to that shown in Figure 4 except that the order of the components is reversed. The rear slide member 16 faces towards the front of the roof assembly and the link arm 18 extends forwardly from the rear slide member to engage in the cam slot of the corresponding cam plate 26. The cam plate has a cam slot similar to slot 25 but oppositely directed.

It is a particular advantage of the construction illustrated that each set of slide member, link arm and cam plate is identical so that separate stocks of left and right hand components do not have to be maintained.

Turning of the hand wheel 21 in a clockwise direction by a vehicle occupant will draw the rear slide member 15 a short distance toward the left (the front of the roof assembly) whilst pushing the rear slide member 16 somewhat away from the front of the roof assembly. Movement of the pins 28 and 24 in the cam slot 25 of the cam plate 26 will produce depression of the trailing edge of the roof panel 11 through a small angle sufficient to allow the roof panel to be slid back under the fixed roof surface of a vehicle in which the assembly is installed. Rearward sliding movement is accomplished simply by the occupant pulling the hand wheel 21 rearwardly.

From the starting position, anti-clockwise rotation of the hand wheel 21 by the occupant will push the rear slide member 15 rearwardly whilst pulling the rear slide member 16 forwardly in their respective guide rails. Movement of the pins 28,24 in the cam slots 25 of the cam plates 26 will produce pivoting of the roof member to raise the trailing edge to the position shown in Figure 1. The pin 24 will escape from the cam slot 25 of each cam plate 26 to allow full opening of the roof panel.

With the trailing edge raised, the roof panel can still be slid rearwardly by pulling on the hand wheel 21.

If desired means may be provided to block rotation of the hand wheel from the roof closed position in a chosen one of the two possible senses. Thus, the roof assembly may easily be limited to spoiler roof or tilt and slide functions by the manufacturer or installer.

The roof illustrated is provided with a sliding canopy 27 below the roof panel 11 which serves to conceal the underside of the roof panel 11 from the interior of the vehicle. As shown, the roof panel 11 is a glass panel carried by a frame and the canopy 27 serves to obscure the glass of the roof panel.

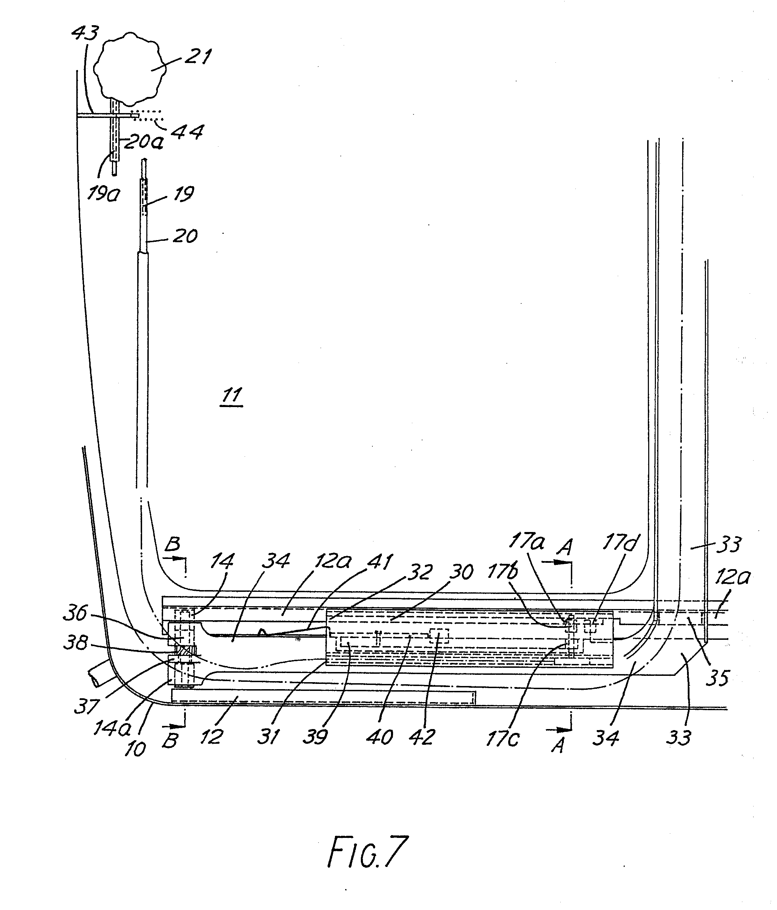

A second embodiment is shown in Figures 7 to 11.

The roof assembly shown in Figure 7 is symmetrical about the midline of the vehicle. With reference to Figures 7 to 11, there is shown a sliding roof frame 10, for instance in either steel or plastics, complete with drain tubes on the corners. A panel 11 of steel, plastic, glass or a combination of all three is carried on the frame. Mounted in the frame 10 are guide rails 12 and 12a. Two helically ribbed cables 19, 19a running in guides 20, 20a are operated by a handwheel 21 to control the raising and lowering of the sliding panel 11.

Guide rail 12 extends longitudinally facing inwardly and is shaped to provide guidance for the panel when it is to be slid back in the raised position.

Guide rail 12a extends opposite guide rail 12 inboard thereof and faces outwardly. It guides the panel during sliding thereof beneath the fixed roof surface and accordingly, it extends further rearwardly than guide rail 12.

The roof panel is provided on each side with a pair of front sliding shoes 14 and 14a which are positioned at opposite ends of a laterally running threaded spindle 36. Spindle 36 is carried by an apertured lug 37 depending from the panel 11 so that the spindle 36 may be shifted laterally in lug 37 to engage shoe 14 in guide rail 12a or shoe 14a in guide rail 12.

A pinion 38 has a threaded bore in mesh with the spindle 36 and has helical teeth mesh with the helical ribs of cable 19 such that movement of the cable 19 causes lateraly shifting of the spindle 36.

The forward extensions 34 of the drain channel 33 are pivoted on spindle 36 so that the drain channel moves fore and apt with the panel.

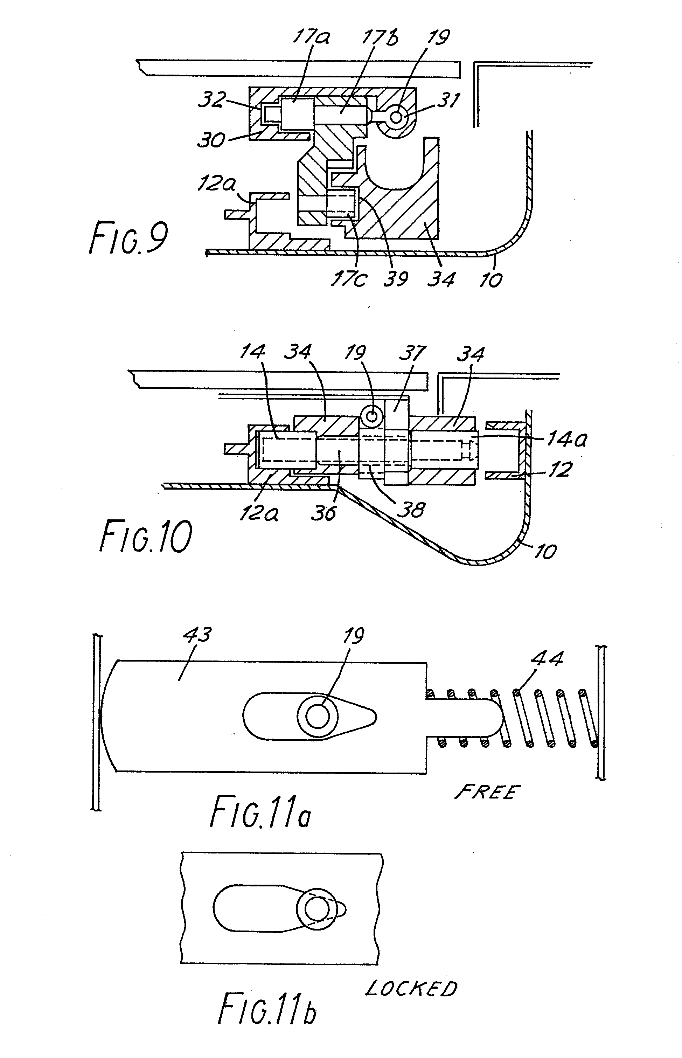

A slide rail 30 is mounted to the underside of the sliding panel and houses cable 19 in a circular channel 31 extending longitudinally in a wall of the slide rail 30. A link arm 17 is permanently engaged in an outwardly sideways facing channel 32 extending longitudinally opposite channel 31 in slide rail 30 by means of a roller 17a running on a pin 17b and by means of a shaft extending at right angles from the end of cable 19 (Figure 9) to the end of pin 17b. A drain channel 33 is provided below the rear edge of the panel 11 and has forward reaching extensions 34. A curved channel facing inwardly and running longitudinally acts as a guide rail and is integral with each forward reaching extension 34 of drain channel 33. A shoe 35 provides rear support for drain channel 33 and slides in slide rail 12a, hence acting as a rear slide member for the roof panel. The drain channel 33 and its extensions 34 slide with the panel.

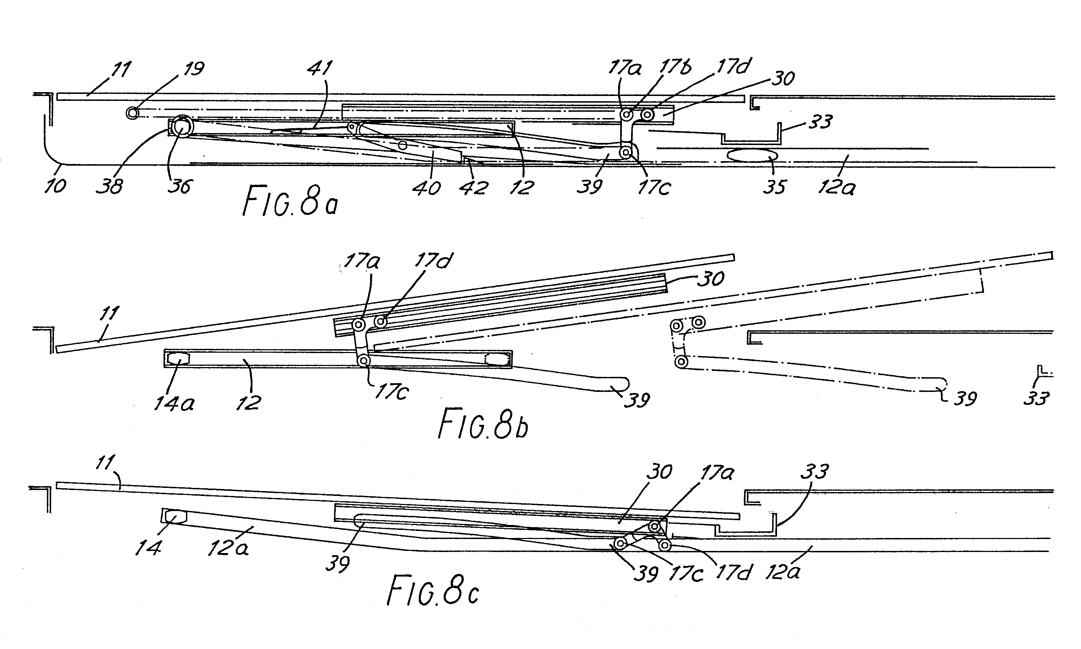

Guide channel 39 receives a roller of 17c (Figure 8a) projecting laterally outwards from the foot of link arm 17. Movement of the roller 17c along the guide channel 39 serves to produce tilting up and tilting down of the roof panel. Link arm 17 has the form of an inverted L having roller 17c at the free end of the upright of the L, roller 17a at the angle of the L, and a third roller 17d at the free end of the short arm of the L. Both rollers 17a and 17d are normally engaged in slide rail 30.

The forward extension 34 of the drain channel 33 carries a catch arm 40 which is pivoted intermediate its ends to extension 34 and which is biassed to depress its rearward end by a spring 41 acting between the forward end of catch arm 40 and the extension 34.

The operation of the roof assembly is as follows.

Considering the first side elevation (Figure 8a), the roof is shown closed. A direct tension/compression link is given by lever 17 engaged in slide rail 30 and channel 39. The forward support is by a concentric mounting with shoes 14, 14a and spindle 36. This gives good stability to the sliding panel when closed.

Tilting is effected by turning wheel 21 which, by means of a pinion, not shown, pulls cable 19 and hence lever 17 to the left and, because slide rail 30 and channel 39 converge towards the front of the assembly, i.e. channel 39 rises toward the front of the assembly, opens the sliding panel to the tilt position. (See Figure 8b). Catch arm 40, together with spring 41 is arranged to engage a stop 42, fixed to the frame 10, to prevent the panel 11 being moved rearwards before it is fully raised, thus avoiding damage to the car roof. Upon reaching its fully forward position, lever 17 depresses the upper end of lever 40 and frees it from stop 42; the sliding panel can now be moved rearwards over the top of the roof. While the panel was raised, the cable 19 will have rotated pinion 38 which in turn will have screwed spindle 36 and slide shoes 14 and 14a towards the outside and engaged shoe 14a in track 12. Track 12 runs essentially parallel to the roof contour and ensures that the sliding panel has an unchanging path all the way back. This allows a fair opening and good appearance.

To prevent the lowering of the panel when it is slid back over the roof a catch 43 is provided (Figure 11a). A spring 44 urges the catch into engagement with the helix of cable 19 on the free or runout side of the cable. Only when the catch 43 abuts against the frame or a part mounted to it and is deflected against the spring is the cable free to move.

Considering the third side elevation, the panel is shown fully depressed, ready to be pushed back to a fully open position. Lever 17 has reached the end of guide rail 39 and also lost its engagement of steadying roller 17d in slide rail 30. This causes the lever to rotate forwardly about roller 17c, bringing the panel down. On full depression, the steadying roller 17d enters a cut-out 45 in track 12a. When the panel is now moved back, the roller 17d is trapped in guide rail 12a, providing stability and preventing rattles with the roof open. Shoe 14 has moved back to its guide rail 12a which allows the front of the panel to slide down and under the rear of the roof.

The use of two separate guide rails 12 and 12a, and laterally movable front slide shoes to engage either guide rail according to function is an inventive feature of the roof shown.

The longitudinal motion of lever 17 according to the function selected is a further inventive feature.

The combination of cable lock 43 and slide lock catch arm 40 which controls panel movement so that sliding of the panel is permitted only when the panel is correctly positioned is a further independently inventive feature.

It can be seen that the roof assembly described provides the functions previously separately provided by tilt and slide sunroofs and spoiler roofs for vehicles.

The invention includes vehicles incorporating a roof assembly as generally described herein.

Whilst the invention has been described with reference to the particular characteristics of the illustrated embodiment, many modifications and variations thereof are possible within the scope of the invention. For instance the roof panel may be a steel panel or an unframed glass panel. Tilting and/or sliding movement of the panel may be motor driven rather than manually effected.

## Claims

1. An opening roof assembly for a motor vehicle comprising a roof panel (11), a frame (10) for mounting to a fixed roof portion of a vehicle and means (12, 13, 14, 15, 16, 17, 18) for mounting the roof panel to the frame for movement to and from a roof panel closed position suitable for closing an aperture in such a fixed roof portion, characterised in that the said mounting means permits the following user controlled movements of the roof panel from the said closed position:-

(a) pivoting to raise the trailing edge of the roof panel;

(b) pivoting in an opposite sense to depress the trailing edge of the roof panel;

(c) movement (a) followed by rearward sliding of the roof panel with respect to the frame; and

(d) movement (b) followed by rearward sliding of the roof panel with respect to the frame.

2. A roof assembly as claimed in Claim 1, wherein the frame (10) of the assembly comprises or carries a pair of longitudinally running, oppositely laterally disposed guide rails (12, 13), on which the roof panel is supported for sliding movement by a pair of front slide members (14) and a pair of rear slide members (15, 16), wherein the roof panel (10) is connected to the slide members via a pair of link arms (17, 18), and wherein each link arm is articulated to the roof panel or a respective rear slide member and is provided with at least one cam follower member (24, 28) cooperating with a cam path (25) associated with the other of said roof panel and the respective rear slide member.

3. A roof assembly as claimed in Claim 2, wherein each link arm (17, 18) is provided with two said cam follower members, each link arm is associated with a respective cam path and each cam path comprises two portions to be followed, one by each of the two cam follower members, during pivoting of the roof panel at least between the closed position and positions in which the trailing edge thereof is depressed from the closed position, displacement of the rear slide members (15, 16) relative to the roof panel (10) causing said cam follower members (24, 28) to follow their respective cam paths (25) and each said cam path being shaped to produce pivoting of the link arms to pivot the roof panel to raise or lower the trailing edge thereof according to the sense of said relative displacement.

4. A roof assembly as claimed in Claim 3, wherein the sense of the displacement of a first of said rear slide members with its associated link arm and cam path relative to the respective guide rail corresponding to raising of the roof panel trailing edge is opposite to the sens of displacement corresponding to said raising movement for the other of said rear slide members with its associated link arm and cam path.

5. A roof assembly as claimed in Claim 4, wherein the rear slide members (15, 16) are connected via a connecting member (19), which member is reversibly displaceable along a drive path (20) to push one rear slide member whilst pulling the other, and drive means (21) is provided for displacing said connecting member (19) along said drive path.

6. A roof assembly as claimed in any preceding claim, comprising on each side of the roof assembly a pair of longitudinally extending guide rails (12, 12a) associated with the frame of the roof assembly, one rail (12) in each said pair providing guidance for a respective front slide member (14a) during rearward sliding with the panel raised, and the other rail (12a) in each said pair providing guidance for a respective front slide member (14) during rearward sliding with the panel lowered.

7. A roof assembly as claimed in any preceding claim, including means for disabling the assembly from carrying out movements (a) and (c) or including means for disabling the assembly from carrying out movements (b) and (d).

8. A roof assembly as claimed in Claim 7, including user actuable drive means (21) which is actuable to drive, starting from the roof closed position, in a first sense to bring about movements (a) and (c) and is actuable, starting from the roof closed position, to drive in a second sense to bring about movements (b) and (d), and wherein said disabling means serves to prevent said driving movement in one of said first and second senses starting from the roof closed position.

9. An opening roof assembly for a motor vehicle comprising a roof panel (11), a frame (10) for mounting to a fixed roof portion of a vehicle and means for mounting the roof panel to the frame for movement to and from a roof panel closed position by pivoting of the roof panel, wherein the roof panel is connected to slide members (14, 15, 16) via a pair of link arms (17), the slide members being carried by a pair of oppositely laterally disposed, longitudinally running guide rails (12, 13) associated with the frame, wherein each link arm (17) is articulated to the roof panel or a respective rear slide member (15, 16) and is provided with at least one cam follower member (24) cooperating with a cam path (25) associated with the other of said roof panel and the respective rear slide member and wherein displacement of the rear slide members relative to the roof panel causes said cam follower member or members to follow their respective cam paths and each said cam path is shaped to produce pivoting of the link arm to pivot the roof panel according to the sense of said relative displacement, characterised in that the arrangement is such that the sense of said relative displacement corresponding to pivoting of the roof panel in a selected sense for a first of said rear slide members with its associated link arm and cam path is opposite to that corresponding to said pivoting movement for the other of said rear slide members with its associated link arm and cam path.

10. An opening roof assembly for a motor vehicle comprising a roof panel (11), a frame (10) for mounting to a fixed roof portion of a vehicle and means for mounting the roof panel to the frame for movement to and from a roof panel closed position suitable for closing an aperture in such a fixed roof portion, characterised in that the said mounting means includes components which can be assembled to mount the roof panel so as to permit the following user controlled movements of the roof panel from the said closed position:-

(1) pivoting to raise the trailing edge of the roof panel; and

(2) movement (1) followed by rearward sliding of the roof panel with respect to the frame;

and includes components which can be assembled to mount the roof panel so as to permit the following user controlled movements of the roof panel from the said closed position:-

(3) pivoting to depress the trailing edge of the roof panel; and

(4) movement (3) followed by rearward sliding of the roof panel with respect to the frame.

11. An opening roof assembly for a motor vehicle comprising a roof panel (11), a frame (10) for mounting to a fixed roof portion of a vehicle and means for mounting the roof panel to the frame for movement to and from a roof panel closed position suitable to close an aperture in such a fixed roof portion by tilting of the roof panel and sliding of the tilted roof panel,

said frame comprising or carrying a pair of oppositely laterally disposed, longitudinally running guide rails (12, 13) on which the roof panel is supported for sliding movement by a pair of front slide members (14) and a pair of rear slide members, (15, 16), and said roof panel being connected to the slide members via a pair of pivoted link arms, (17, 18) wherein the roof assembly includes an actuator (21) connected to each of said link arms and adapted to produce controlled pivoting of said link arms to tilt the roof panel, which actuator (21) is mounted on the roof panel (11) and slides with the roof panel.

12. An opening roof assembly for a vehicle comprising a roof panel (11), a frame (10) for mounting to a fixed roof portion of a vehicle and means for mounting the roof panel to the frame for movement to and from a roof panel closed position suitable for closing an aperture in such a fixed roof portion, wherein the said mounting means permits, starting from the roof closed position, pivoting to raise the trailing edge of the roof panel and wherein the frame carries or comprises a pair of laterally disposed, longtudinally running guide rails (39) and the roof panel carries a pair of laterally disposed, longitudinally running guide rails (30), the guide rails of the frame diverging rearwardly from the guide rails of the panel in the roof closed position, said mounting means comprising a pair of front panel supports (14 or 14a) by which the panel is mounted for pivoting movement and a pair of link arms (17) each connecting between and being slideable in both of a respective guide rail of the roof panel and a respective guide rail of the frame, whereby sliding of the link arms forwardly in said guide rail causes pivoting to raise the trailing edge of the roof panel.

13. An assembly as claimed in Claim 12, wherein the frame comprises or carries a fixed second pair of laterally disposed, longitudinally extending guide rails (12a), the said front panel supports are a pair of shoes (14) slideable in said second pair of guide rails, and said first mentioned pair of guide rails of the frame (39) are slideable also in the second pair of guide rails (12a) for sliding movement with the panel whereby the panel is slideable rearwardly from the closed position after the rear edge thereof has been raised.

Fig.1

FIG. 2

FIG. 3

FIG.4

0284400

0284400

FIG 4A

FIG.4B

FIG.5

23  28  24  25  26

15  17

13  20  19  18  16

FIG.6

0284400

0284400

FIG.7

Fig.8a

Fig.8b

Fig.8c

FIG.9

FIG.10

FIG.11a

FREE

FIG.11b

LOCKED